# EUROPEAN PATENT APPLICATION

(11) **EP 4 850 521 A1**
(43) Date of publication of application: **09.12.2026**
(21) Application number: 25181387.9
(22) Date of filing: 06.06.2025
(51) Int. Cl.: A01G 3/025, A01G 3/037, A01G 3/053, A01G 3/08

(54) **CUTTING TOOL FOR GARDENING**

(71) Applicant: Fiskars Finland Oy Ab, 02150 Espoo (FI)
(72) Inventor: Heine, Mikko, 02150 Espoo (FI); Rusanen, Niko, 02150 Espoo (FI)
(74) Representative: Kolster Oy Ab

(57) **Abstract**

A cutting tool (1) comprising a shaft (2); a motor-driven cutting head (3) attached to the shaft; three user operable power switches (11, 12, 13) arranged on the shaft (2), said three power switches comprising a first power switch (11), a second power switch (12), and a third power switch (13); wherein the first power switch (11) and the second power switch (12) determine a first holding position (POS1) for user hands; and the first power switch (11) and the third power switch (13) determine a second holding position (POS2) for user hands; and wherein power supply to the cutting head (3) is switched on when the two power switches at the first holding position (POS1) are actuated simultaneously or when the two power switches at the second holding position (POS2) are actuated simultaneously.

## Description

### FIELD OF THE INVENTION

The present invention relates to a cutting tool for gardening, particularly to a hedge trimmer.

### BACKGROUND OF THE INVENTION

WO 2008/138468 A2 discloses a telescoping motor-driven hedge trimmer having a first handle with a first switch on a base body and a working head that can be adjusted to different distances relative to the base body by means of a telescoping shaft. A second handle with a second switch is provided on a slidable telescoping segment, said segment being displaceable relative to the base body.

### BRIEF DESCRIPTION OF THE INVENTION

An object of the present invention is to provide an improved a cutting tool for gardening, particularly an improved hedge trimmer. The objects of the invention are achieved by a cutting tool which is characterized by what is stated in the independent claim. The preferred embodiments of the invention are disclosed in the dependent claims.

The invention is based on the idea of providing a cutting tool comprising an elongated shaft with two different holding and operating positions for user hands. The two different holding and operating positions for user hands may also be called dual hand holding and operating positions. The cutting tool comprises three user operable power switches arranged on the shaft at said dual holding positions enabling to operate a motor-driven cutting head attached to the shaft of the cutting tool, wherein two of said switches must be actuated simultaneously for power supply of the motorized cutting head. This kind of cutting tool equipped with a long or elongated shaft may also be called a pole cutting tool.

According to an embodiment a first switch and a second switch of said power switches are arranged for a first holding position, the first switch and a third switch are arranged for a second holding position; and one of the second and third switches must be actuated simultaneously with the first switch for power supply of the cutting head.

According to an embodiment the first power switch is arranged on the shaft between the other two power switches and is configured as common switch to be operated in each operating configuration of the cutting tool.

According to an embodiment the first switch is located on opposite side of the shaft in relation to the second and third switches. This location provides for a safer user interface for the cutting tool when the cutting tool is lowered on ground. Thus, in each of the operating positions the power switches are not actuated simultaneously by the ground when the cutting tool is lowered on the ground surface.

The invention is also based on the idea of using the very same cutting tool to vertical cutting for example of a hedge, additionally to horizontal cutting, that could be also cut with a small or short cutting tool. The idea is to use the long shaft of the cutting tool as a counterweight for a more comfortable and weight balanced use of the trimmer.

An advantage of the cutting tool of the invention is that the user of the cutting tool can choose whether to use the cutting tool safe and balanced in such operation configurations where the hands are positioned closer to a distal end with counterweight of the shaft and further away from the cutting blades, or in such operation configuration where the hands are further away from the distal end and closer to cutting blades.

The cutting tool with a long or elongated shaft has two positions for the user to operate the cutting tool.

According to an embodiment the shaft is extendable and retractable, for example the shaft may be telescopic. The cutting tool may be used for pruning branches or forest trees.

According to an embodiment the cutting head comprises a hedge trimmer. The hedge trimmer may comprise a cutting mechanism like that of finger-bar mowers with a bar with sharp blades moving back and forth in relation to a stationary bar with fingers.

According to an embodiment the cutting head comprises a chainsaw. According to an embodiment the cutting head comprises a jigsaw with a reciprocating saw blade.

According to an embodiment the shaft comprises a cutting end and an opposite distal end.

According to an embodiment a motor-driven cutting head is arranged pivotable at the cutting end of the shaft. According to an embodiment the cutting head is arranged pivotable at the shaft opposite to the distal end of the shaft.

According to an embodiment the cutting head is arranged stationary at the cutting end of the shaft.

According to an embodiment the cutting tool comprises a counterweight arranged at the distal end of the shaft, the distal end being distal to the cutting head.

According to an embodiment the cutting tool comprises at the shaft end distal to the cutting head a battery for driving a cutting head motor. The shaft end distal to the cutting head may optionally comprise at least one auxiliary weight.

According to an embodiment the cutting head comprises a motor for driving the cutting head.

According to an embodiment the cutting tool comprises at the distal end of the shaft a motor for driving the cutting head, preferably via an inside channel comprised by the shaft.

According to an embodiment at least one of the first, second and third power switch comprises a mechanical switch or a sensor being capable of sensing user switch actuation such as a hall sensor. A trigger of the switch may have a small magnet that is detected by a hall sensor. The sensors may be connected to an I/O bus of a microcircuit, and the operating logic may be provided by software.

At least two buttons need to be pressed for safety reasons to prevent accidental powering on the device. Using two hands for powering the device makes the buttons easier to operate, that helps the user to manoeuvre the device.

### BRIEF DESCRIPTION OF THE DRAWINGS

In the following the invention will be described in greater detail by means of preferred embodiments with reference to the attached drawings, in which
Figure 1 shows a cutting tool according to an embodiment of the invention with a retracted telescopic shaft, particularly a hedge trimmer, in a first operation configuration in which a first power switch and a second power switch can be actuated when a user operates the cutting tool keeping hands in a first holding position;
Figure 2 shows the cutting tool of Figure 1, the telescopic shaft being retracted, in a second operation configuration in which the first power switch and a third power switch can be actuated when the user operates the cutting tool keeping hands in a second holding position;
Figure 3 shows the cutting tool of Figure 1, the telescopic shaft being extended, in a third operation configuration in which the first power switch and the third power switch can be actuated when a user operates the cutting tool keeping hands in the second holding position;
Figure 4 shows the cutting tool of Figure 1, the telescopic shaft being extended, in a fourth operation configuration in which the first power switch and the third power switch can be actuated when a user operates the cutting tool keeping hands in the second holding position;
Figure 5 shows a cutting tool according to an embodiment of the invention depicting two holding positions;
Figure 6 shows the cutting tool of Figure 5 in retracted and extended positions; and
Figure 7 shows examples of two electrical circuits for the cutting tool switches.

### DETAILED DESCRIPTION OF THE INVENTION

In the following, embodiments of a cutting tool 1 are described in more detail, the cutting tool comprising a shaft 2 and a motor-driven cutting head 3 attached to the shaft.

The cutting tool comprises three user operable power switches 11, 12, 13 arranged on the shaft 2, said three power switches comprising a first power switch 11, a second power switch 12 and a third power switch 13.

The first power switch 11 and the second power switch 12 determine a first holding position POS1 for the hands of a user; and the first power switch 11 and the third power switch 13 determine a second holding position POS2 for user hands.

A power supply to the cutting head 3 is switched on when the two power switches at the first holding position POS1 are actuated simultaneously or when the two power switches at the second holding position POS2 are actuated simultaneously.

The cutting tool 1 with a long or elongated shaft 2 has two positions for the user to operate the cutting tool. The shaft in its extended state ensures smoother and more even cut results since sudden hand movements are reduced. Optimized weight balance reduces strain and improves control of the cutting tool.

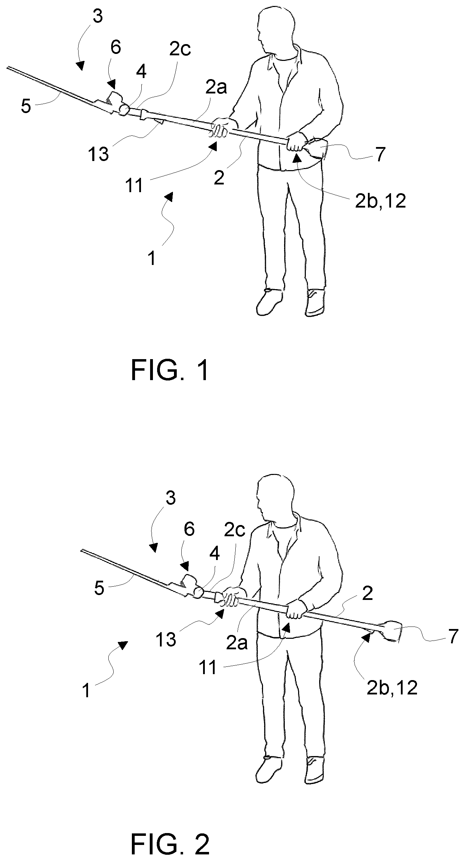

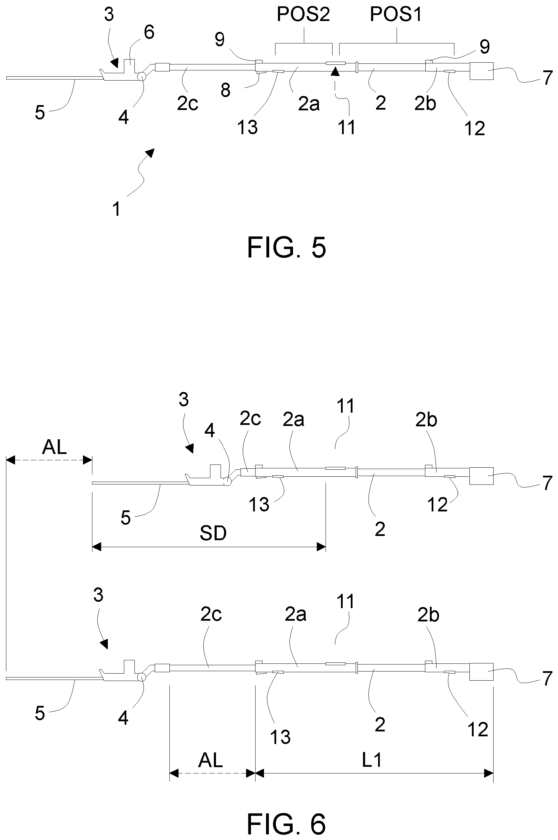

Figure 1 shows a cutting tool 1 according to an embodiment of the invention with a retracted telescopic shaft 2 or pole, particularly a hedge trimmer, in a first operation configuration in which the first power switch 11 and the second power switch 12 actuatable by the user to operate the cutting tool keeping hands in the first holding position POS1, as clarified also in Figure 5.

Figure 2 shows the cutting tool 1 of Figure 1 in a second operation configuration in which the first power switch 11 and the third power switch 13 are actuatable by the user to operate the cutting tool keeping hands in the second holding position POS2.

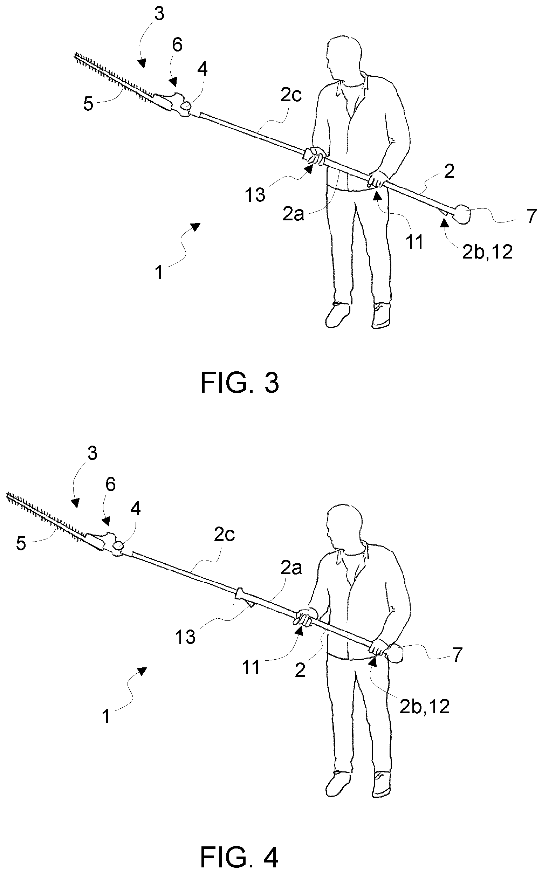

Figure 3 shows the cutting tool in a third operation configuration, the telescopic shaft 2 being extended, wherein the first power switch 11 and the third power switch 13 are actuatable by the user to operate the cutting tool 1 keeping hands in the second holding position POS2.

Figure 4 shows the cutting tool in a fourth operation configuration, the telescopic shaft 2 being extended, wherein the first power switch 11 and the third power switch 13 are actuatable by the user to operate the cutting tool 1 keeping hands in the first holding position POS1.

The user of the cutting tool can choose whether to use the cutting tool 1 safe and balanced in such operation configurations where the hands are positioned closer to a distal end 2b of the shaft with a counterweight of the shaft (provided by e.g., a battery 7) and further away from the cutting blades 5; or in such operation configuration where the hands are further away from the distal end 2b and closer to cutting blades 5.

Preferably the power supply to the cutting head 3 is switched on when the first power switch 11cand the second power switch 12 are actuated simultaneously or when the first power switch 11 and the third power switch 13 are actuated simultaneously.

Preferably one of the second 12 and third 13 power switches must be actuated simultaneously with the first power switch 11 for power supply of the cutting head.

In the Figures, the first power switch 11 is arranged on the shaft 2 between the other two power switches 12; 13 and the first power switch 11 is configured as common power switch to be operated in each power switching configuration of the cutting head 3.

Preferably the second holding position POS2 for user hands is closer to the cutting head than the first holding position POS1.

According to the embodiments shown in the Figures, the shaft (2) is extendable and retractable, preferably telescopic. According to optional embodiments, the long or elongated shaft may also have a fixed length.

According to the embodiments shown in the Figures, the cutting head 3 is arranged pivotable at a cutting end 2c of the shaft.

According to an embodiment, the cutting tool 1 comprises a pivot 4 arranged between the shaft 2 and the cutting head 3, the pivot allowing pivoting the cutting head in various cutting positions in relation to the shaft 2 and to a folded and shortened storing position of the cutting tool.

According to the embodiments shown in the Figures, the cutting head 3 comprises a motor 6 for driving the cutting head 3. According to optional embodiments, the cutting tool 1 comprises at the distal end 2b of the shaft a motor for driving the cutting head.

According to the embodiments shown in the Figures, the cutting tool 1 comprises at the shaft end 2b distal to the cutting head 3 a battery 7 for driving a cutting head motor 6, the battery acting as a counterweight.

As best can be seen in Figure 5, the first power switch 11 is located on an opposite side of the shaft 2 in relation to the second 12 and third 13 power switches. This prevents the cutting tool 1 starting up on its own when lowered to the ground.

According to the embodiments shown in the Figures, the second power switch 12 is located at the distal end 2b of the shaft 2, the distal end being equipped with a handle for user comfortability and safety. The handle comprises an eye for an auxiliary strap 9.

According to the embodiments shown in the Figures, the first power switch 11 and the third power switch 13 are located in a middle section 2a of the shaft 2, the middle section being equipped with a handle for user comfortability and safety. This handle comprises also an eye for an auxiliary strap 9.

The extension and retraction of the shaft is achieved by shaft parts that can be locked together by means of a locking mechanism 8.

Figure 6 shows the cutting tool of Figure 5 in retracted and extended positions. In the upper part of Figure 6 a minimum-security distance SD between the first switch 11 and the end of the cutting blade 5 is shown when the shaft 2 is in retracted state, wherein preferably SD is larger than 85 cm.

The shaft 2 may be extended by the adjustment length AL from the length L1 being about 1 m.

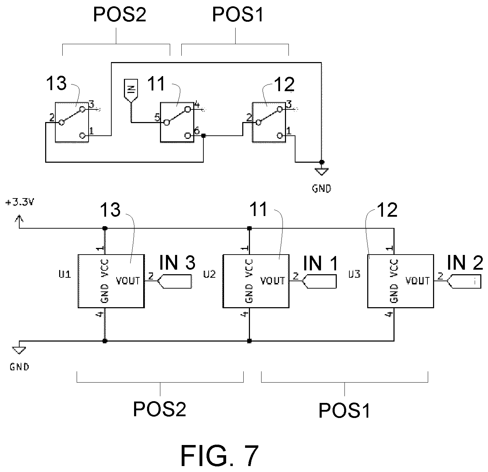

In the upper part of Figure 7 an example of an electrical circuit for mechanical power switches 11, 12, 13 is illustrated. The first, second and third power switches 11, 12, 13 comprise a mechanical switch. Power supply to the cutting head 3 is switched on when the two power switches at the first holding position POS1 are actuated simultaneously or when the two power switches at the second holding position POS2 are actuated simultaneously.

In the lower part of Figure 7 an example of an electrical circuit for power switches implemented by sensors being capable of sensing user switch actuation such as a hall sensor. A trigger of the switch may have a small magnet that is detected by a hall sensor. The sensors are connected to I/O buses IN 1; IN 2; IN 3 of a microcircuit, and the operating logic may be provided by software.

It will be obvious to a person skilled in the art that the inventive concept can be implemented in various ways. The invention and its embodiments are not limited to the examples described above but may vary within the scope of the claims.

## Claims

1. A cutting tool (1) comprising
a shaft (2);
a motor-driven cutting head (3) attached to the shaft;
**characterized in that** the cutting tool comprises three user operable power switches (11, 12, 13) arranged on the shaft (2), said three power switches comprising a first power switch (11), a second power switch (12), and a third power switch (13);
wherein the first power switch (11) and the second power switch (12) determine a first holding position (POS1) for user hands; and the first power switch (11) and the third power switch (13) determine a second holding position (POS2) for user hands;
wherein power supply to the cutting head (3) is switched on when the two power switches at the first holding position (POS1) are actuated simultaneously or when the two power switches at the second holding position (POS2) are actuated simultaneously.

2. The cutting tool according to claim 1, wherein power supply to the cutting head (3) is switched on when the first power switch (11) and the second power switch (12) are actuated simultaneously or when the first power switch (11) and the third power switch (13) are actuated simultaneously.

3. The cutting tool according to claim 1 or 2, wherein one of the second (12) and third (13) power switches must be actuated simultaneously with the first power switch (11) for power supply of the cutting head.

4. The cutting tool according to claim 1, 2 or 3, wherein the first power switch (11) is arranged on the shaft (2) between the other two power switches (12; 13) and the first power switch (11) is configured as common power switch to be operated in each power switching configuration of the cutting head.

5. The cutting tool according to any one of the preceding claims, wherein the second holding position (POS2) for user hands is closer to the cutting head than the first holding position (POS1).

6. The cutting tool according to any one of the preceding claims, wherein the first power switch (11) is located on an opposite side of the shaft (2) in relation to the second (12) and third (13) power switches.

7. The cutting tool according to any one of the preceding claims, wherein the shaft (2) is extendable and retractable, preferably the shaft is telescopic.

8. The cutting tool according to any one of the preceding claims, wherein the cutting head (3) is arranged pivotable (4) at a cutting end (2c) of the shaft (2).

9. The cutting tool according to any one of the preceding claims, wherein the cutting tool (1) comprises at the shaft end (2b) distal to the cutting head (3) a battery (7) for driving a cutting head motor (6), preferably the battery acting as a counterweight.

10. The cutting tool according to any one of the preceding claims, wherein the cutting head (3) comprises a motor (6) for driving the cutting head.

11. The cutting tool according to any one of the preceding claims 1-9, wherein the cutting tool (1) comprises at the distal end (2b) of the shaft a motor for driving the cutting head.

12. The cutting tool according to any one of the preceding claims, wherein at least one of the first, second and third power switch (11, 12, 13) comprises a mechanical switch.

13. The cutting tool according to any one of the preceding claims, wherein at least one of the first, second and third power switch (11, 12, 13) comprises a sensor being capable of sensing user switch actuation such as a hall sensor.

14. The cutting tool according to any one of the preceding claims, wherein the shaft end (2b) distal to the cutting head (3) comprises at least one auxiliary weight.

15. The cutting tool according to any one of the preceding claims, wherein the cutting head (3) comprises a hedge trimmer; or a chainsaw; or a jigsaw.
